# EUROPÄISCHE PATENTSCHRIFT

(11) **EP 4 488 789 B1**
(45) Veröffentlichungstag und Bekanntmachung des Hinweises auf die Patenterteilung: **08.04.2026**
(21) Anmeldenummer: 23184272.5
(22) Anmeldetag: 07.07.2023
(51) Int. Cl.: G05D 23/19

(54) **REGELUNGSSYSTEM FÜR DIE HEIZUNGSANLAGE EINES GEBÄUDES**
CONTROL SYSTEM FOR THE HEATING SYSTEM OF A BUILDING
SYSTÈME DE COMMANDE POUR INSTALLATION DE CHAUFFAGE D'UN BÂTIMENT

(43) Veröffentlichungstag der Anmeldung: 08.01.2025
(73) Patentinhaber: Yuon Control AG, 3414 Oberburg (CH)
(72) Erfinder: MÜHLEBACH, Lorin, 8002 Zürich (CH); JENNI, Josef, 3414 Oberburg (CH)
(74) Vertreter: Mayer, Aline Sophie

(56) Entgegenhaltungen:
- EP-A1- 0 980 034
- WO-A1-2014/062124

## Beschreibung

### TECHNISCHES GEBIET

Die vorliegende Erfindung betrifft ein Regelungssystem für die Heizungsanlage eines Gebäudes.

### STAND DER TECHNIK

Ein Regelungssystem für die Heizung eines Gebäudes ist aus der EP 0 980 034 A1 (auf Deutsch als Übersetzung der Patentschrift B1: DE 699 18 379 T2) bekannt. Die Heizung nutzt ein Wärmeträgerfluid, das von einem Kessel geheizt wird. Dabei besteht ein Vorlaufkreis eines Fluids, der mit einer Umwälzpumpe versehen ist, und mit Radiatoren in den Wohn- oder Geschäftseinheiten des Gebäudes verbunden ist. Die Radiatoren speisen einen Rücklaufkreis des Fluids, wobei ein Mischventil vorgesehen ist, um das Rücklauffluid und das vom Kessel kommende Fluid zu mischen, womit dann der Vorlaufkreis gespeist wird. Dazu gehört eine Steuervorrichtung für das Mischventil, die in der Weise wirkt, dass sie die Vorlauftemperatur des Fluids auf einen Temperatursollwert regelt, wobei die Steuervorrichtung aufweist: erste Mittel zur Klimavorhersage, die Informationen bezüglich Prognosen der Außenbedingungen über einer gegebenen Anzahl elementarer zukünftiger Perioden liefern, zweite Mittel zur Vorhersage der Innentemperatur des Gebäudes ausgehend von Informationen, die von den ersten Mitteln zur Klimavorhersage geliefert werden, dritte Mittel zum Erarbeiten einer Information zum Komfort der Benutzer des Gebäudes, vierte Mittel zum Berechnen der optimalen Heizleistung ausgehend von den Informationen, die von den zweiten und dritten Mitteln erzeugt werden, und schliesslich eine Schaltung zum Erzeugen der Solltemperatur ausgehend von der optimalen Heizleistung und der Temperatur des Rücklauffluids.

Das bekannte Regelungssystem benötigt eine Vielzahl von Stellparametern, die eine aufwendige Installation der Hardware erfordern. Es regelt dabei die Heizleistung über Innentemperaturvorhersagen und Komfortinputangaben des Benutzers.

Die WO 2013/104 948 A1 (in Englisch als US 9,921,590 veröffentlicht), die von der oben genannten EP 0 980 034 A1 ausgeht, nennt als Merkmale der Regelung, dass die Vorlauftemperatur, die vom Benutzer einstellbare Komforttemperatur und die Aussentemperatur als Eingangsvektoren des neuronalen Netzes vorgesehen sind, dass aber die Regelung die dafür verwendete bekannte Eingangsgrösse der Aussentemperatur über die gemessene Vorlauftemperatur modifiziert. Dies soll das Problem der EP 0 980 034 A1 beheben, dass bei geschlossenen Heizkörpern vom Haus keine Energie verbraucht werden kann und somit die Steuerung nicht ordentlich arbeiten kann.

Die WO 2014/062124 A1 betrifft ein Verfahren zum Steuern der Innentemperatur in einem Gebäude, welches ein vorhandenes System zum Regeln der Innentemperatur einsetzt. Dabei umfasst das Verfahren das Bestimmen einer gewünschten momentanen Heiz- oder Kühlleistung, die das System an die Innenraumluft des Objekts abgeben soll; das Berechnen einer fiktiven Temperatur als die fiktiv gemessene Temperatur des Mediums an der Messstelle, die die gewünschte momentane Leistung hervorrufen würde, auf der Grundlage der Kenntnis der Eigenschaften des Systems und des verwendeten Steueralgorithmus; und das Zuführen eines die fiktive Temperatur repräsentierenden Signals zu dem Steuereingang des bestehenden Systems.

### DARSTELLUNG DER ERFINDUNG

Ausgehend von diesem Stand der Technik ist es eine Aufgabe der vorliegenden Erfindung, ein Regelungssystem anzugeben, welches einfacher zu implementieren ist.

Ein Regelungssystem für die Heizungsanlage eines Gebäudes gemäss der Erfindung ist durch die Merkmale des Anspruchs 1 gekennzeichnet.

Bei einem solchen Regelungssystem ist die Steuerung mit einer Energiesteuerungseinheit verbunden, um Verbrauchsdaten zu liefern, und die Energiesteuerungseinheit ist mit der prädiktiven Modellregelung der Steuerung verbunden und dabei konfiguriert, um der prädiktiven Modellregelung eine Kostenfunktion als Eingangsvektor zu übermitteln, wobei die Kostenfunktion zum Brechen von Versorgungsspitzen ausgestaltet ist.

Dabei kann die Energiesteuerungseinheit als Eingangswert den Wert der von der Wärmequelle verbrauchten Energie erhalten.

Das bekannte Regelungssystem benötigt eine Vielzahl von Stellparametern, die eine aufwendige Installation der Hardware erfordern und nur intern die Energieeffizienz steuern. Mit der Erfindung ist es möglich, ein solches System auch im Hinblick auf die für die Heizungsanlage notwendigen weiteren Energiezuflüssen zu optimieren.

Vorteilhafterweise werden die Wärmemengedaten in einem Leistungsberechnungsmodul aus der Vorlauftemperatur und entweder einer Durchflussabschätzung des Vorlaufkreises oder durch eine Durchflussmessung des Vorlaufkreises ermittelt.

Das Gebäudemodell beaufschlagt eine prädiktive Modellregelung mit der modifizierten Vorlauftemperatur), wobei die prädiktive Modellregelung die modifizierte Vorlauftemperatur mit Wetterdaten in eine extern modifizierte Vorlauftemperatur regelt. Solche Wetterdaten stammen aus einer Wetterdaten bereitstellenden Einrichtung, die extern von einem meteorologischen Institut oder einer anderen solche Daten bereitstellenden Entität bereitgehalten werden, oder können teilweise auch durch Sensoren an dem zu heizenden Bauwerk gemessen werden, wie Windgeschwindigkeiten, Temperaturen und Solarexposition

Die Zeitkonstante der maschinenlernenden Instanz des Gebäudemodells ist vorzugsweise um einen Faktor von mindestens 100 grösser ist als die Zeitkonstante der prädiktiven Modellregelung. Mit anderen Worten, die Eingangsvektoren der prädiktiven Modellregelung werden 100 mal häufiger aufgefrischt als die Parameter des Gebäudemodells.

Das Leistungsberechnungsmodul kann als weiteren Eingangsvektor die Rücklauftemperatur aufweisen, was eine genauere Bestimmung des Wärmeverbrauchs ermöglicht.

Die maschinenlernende Instanz eines Gebäudemodells weist vorzugsweise als weiteren Eingangsvektor die Vorlauftemperatur und/oder die Rücklauftemperatur auf. Wenn diese Temperaturen nicht nur für die Wärmemengenschätzung eingesetzt werden, sondern direkt als Eingangsvektoren für die maschinenlernende Instanz eines Gebäudemodells eingesetzt werden, kann diese das Gebäudemodell besser anpassen, da die durch das Gebäude verursachten Einflüsse auf den durch die Temperatur erkennbaren Energieverbrauch direkt vorliegen.

Die maschinenlernende Instanz des Gebäudemodells erhält vorteilhafterweise die Werte aller Eingangsvektoren mit einer Frequenz von 15 Sekunden bis 15 Minuten, bevorzugt jede Minute. Damit wird insbesondere bei dem Einsatz der Vorlauftemperatur und/oder die Rücklauftemperatur feiner auf die Randbedingungen einstellbar, auch wenn das Gebäudemodell selber nur in grösseren Zeitabständen von Tagen bis Wochen in der Steuereinheit aufgefrischt wird.

Häufig wird die maschinenlernende Instanz des Gebäudemodells räumlich getrennt von der Steuerung vorgesehen sein, da diese Instanz mehrere unterschiedliche Verbraucher gleichzeitig betreuen kann.

Vorteilhafterweise weist das Gebäudemodell eine prädiktive Modellregelung mit dem Eingangssignal der modifizierten Vorlauftemperatur auf, wobei die prädiktive Modellregelung die modifizierte Vorlauftemperatur mit Wetterdaten in eine extern modifizierte Vorlauftemperatur für die Regelung der Wärmemengenabgabe durch die Vorlauftemperaturregelung regelt. Dabei ist in der Regel die Zeitkonstante der maschinenlernenden Instanz des Gebäudemodells um einen Faktor von mindestens 100 grösser als die Zeitkonstante der prädiktiven Modellregelung.

Das Regelungssystem kann eine Steuerung aufweisen, bei der die Wärmemengenabgabe durch eine kombinierte Regelung der Erzeugung eines Vorlaufsolltemperatursteuersignals und eines Pumpendrehzahlsteuersignals steuerbar ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Zeichnung einer Heizungsregelungsanlage gemäss einem Ausführungsbeispiel der Erfindung;
- Fig. 2: eine schematische Zeichnung einer Heizungsregelungsanlage gemäss einem weiteren Ausführungsbeispiel der Erfindung;
- Fig. 3: eine schematische Zeichnung eines Systems von Heizungsregelungsanlagen nach Fig. 1 oder Fig. 2 in einem grösseren Gebäudezusammenhang;
- Fig. 4: eine schematische Zeichnung einer Heizungsregelungsanlage mit einer Heizquellen- und Pumpenregelung gemäss einem Ausführungsbeispiel der Erfindung; und.
- Fig. 5: eine schematische Zeichnung einer Heizungsregelungsanlage mit einer Heizquellen- und Pumpenregelung gemäss einem weiteren Ausführungsbeispiel der Erfindung.

### BESCHREIBUNG BEVORZUGTER AUSFÜHRUNGSFORMEN

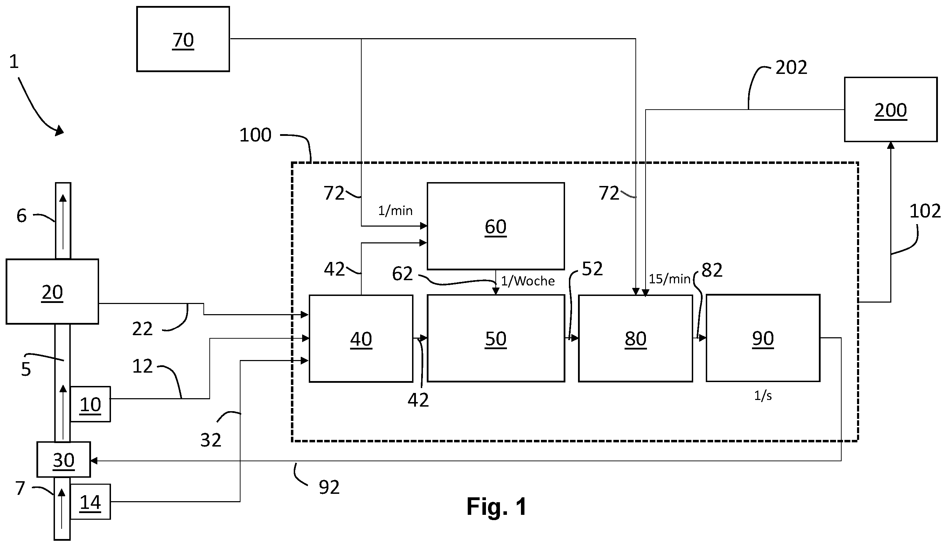

Die Fig. 1 zeigt eine schematische Zeichnung einer Heizungsregelungsanlage 1 gemäss einem Ausführungsbeispiel der Erfindung, bei der ein Fluid 5, hier in einer Leitung 6 dargestellt, durch eine Heizungseinheit wie einen Heizungskessel 30 auf eine Vorlauftemperatur aufgeheizt wird. Die Vorlauftemperatur 12 ist in Fig. 1 durch den Vorlauftemperatursensor 10 dargestellt. Das Fluid wird durch eine Pumpe 20 in die Leitungen der Gebäudeeinheit gepumpt, gibt dort Wärme ab und kommt dann mit einer Rücklauftemperatur zum Heizungskessel als Wärmequelle 30 zurück.

In einem anderen Ausführungsbeispiel ist nicht die vollständige Fluidmenge im Kreislauf, sondern der Heizungskessel als Wärmequelle 30 heizt einen Flüssigkeitsvorrat auf, der dann über ein Mischventil der Leitung 6 zugemischt wird.

Die Steuerung 100 umfasst eine Einheit zur thermischen Leistungsberechnung 40. Diese erhält als Inputsignal die Vorlauftemperatur 12 und eine Durchflussabschätzung 22. Im Falle des Einsatzes eines Mischventils wird diese Durchflussabschätzung 22, üblicherweise in m3/h, aus dem Durchfluss der Leitung 6 zu den Wärme abgebenden Heizungskörpern berechnet. Damit ergibt sich in der Einheit zur thermischen Leistungsberechnung 40 ein Wert für die abgegebene Wärmemenge 42, auch ohne konkretes Wissen um die Rücklauftemperatur 32, um eingestellte Thermostate in den Wohnungen oder anderer Parameter.

Die Steuerung 100 umfasst neben der Leistungsberechnungseinheit 40 eine Gebäudemodelleinheit 50, die als einen Eingangsvektor die geschätzte verbrauchte Wärmemenge 42 aufweist. Diese Gebäudemodelleinheit 50 erhält als weiteren Steuervektor einen Gebäudeabhängigen Eingangsvektor 62 von einer Instanz 60 des maschinellen Lernens. Die ML-Instanz 60 selber hat als Eingangsvektoren mindestens die verbrauchte Wärmemenge 42 und hier als zweiten externen Eingangsvektor 72 zusammengefasst: Wetterdaten aus dem Internet oder lokal gemessen, die Solarstrahlung am Standort und die Aussentemperatur, die sich aus einer lokalen oder entfernt angeordneten Datenerfassung 70 ergeben.

Die ML-Instanz 60 des Gebäudemodells startet von einem Datensatz basierend auf Eingangstypologien von Gebäuden und wird dann über die Zeit durch die genannten Eingangsvektoren Wärmemenge 42 und den Wetterdaten 72 angepasst. Dabei werden die Eingangsvektoren 42 und 72 beispielsweise im Minutenabstand upgedatet, während als regelmässiger Optimierungszyklus des Gebäudemodelleinheit 50 anhand der besagten Betriebs- und externen Daten 42 und 72 ein Zeitraum von vorteilhafterweise nicht unter einer Woche vorgesehen. Die Eingangsvektoren können auch halbstündlich oder stündlich upgedatet werden, während die Gebäudemodelleinheit 50 alle 5 bis 10 Tage upgedatet wird.

Der externe Datenvektor 72 dient auch als Eingangsvektor für eine prädiktive Modellregelung 80, die beispielsweise mit einer viertelstündlichen Frequenz upgedatet wird, wobei als Eingangssignal 52 eine durch die Gebäudemodelleinheit 50 modifizierte Vorlauftemperatur vorgesehen ist, die dann als extern modifizierte Vorlauftemperatur 82 in einen Regelkreis 90 der Soll-Vorlauftemperatur eingespeist wird. Dieser Regelkreis 90 kann ein PI-Regler sein, dessen Ausgangssignal dann das Steuersignal für die Wärmequelle 30 zur Einstellung der Soll-Vorlauftemperatur 92 ist.

Die oben genannten Einheiten sind die Basiselemente eines Ausführungsbeispiels der Erfindung. Bei einem erweiterten Ausführungsbeispiel ist diese Steuereinheit 100 in einer Feedbackschlaufe mit einer Steuereinheit 200 eines externen Versorgers verbunden.

Eine solche Heizungsanlage eines Gebäudes ist in der Regel nicht autonom und selbst wenn sie eine eigene Energieversorgung hat, wie durch eigene PV-Anlagen oder Windanlagen, ist eine Optimierung des internen Energieverbrauchs wünschenswert, weil eventuell überschüssige Energie abgegeben werden kann. Wenn also in Folge von einem (externen) Energieversorger gesprochen wird so kann dies auch der interne Energieversorger sein.

Die Heizungsanlage ist also mit einem (internen/externen) Energieversorger verbunden, der beispielsweise die Heizleistung im Wärmeverbund liefert oder die Energie zum Betrieb der Heizkessel oder Wärmequellen 30, der Steuerung 100 und der Pumpe 20 liefert. Insofern ist der Betreiber der Anlage und der Energieversorger an einem energieeffizenten Betrieb interessiert. Dafür liefert die Steuerung 100 Verbrauchsdaten 102 an eine Steuereinheit 200 des Energieversorgers. Dieser stellt eine oder mehrere Kostenfunktionen 202 zur Verfügung, die dem Brechen von Versorgungsspitzen und anderen Punkten der Verbesserung der Energieeffizienz dienen. Diese Kostenfunktionen werden als weiterer Eingangsvektor der prädiktiven Regelung 80 zur Verfügung gestellt.

Es ist optional möglich, dass ein Temperatursensor 14 die Rücklauftemperatur 32 des Rücklaufkreislaufes 7 misst. Dann kann die Rücklauftemperatur 32 auch als weiterer Eingangswert der Leistungsberechnungseinheit 40 vorgesehen sein, um die Schätzung zu verbessern.

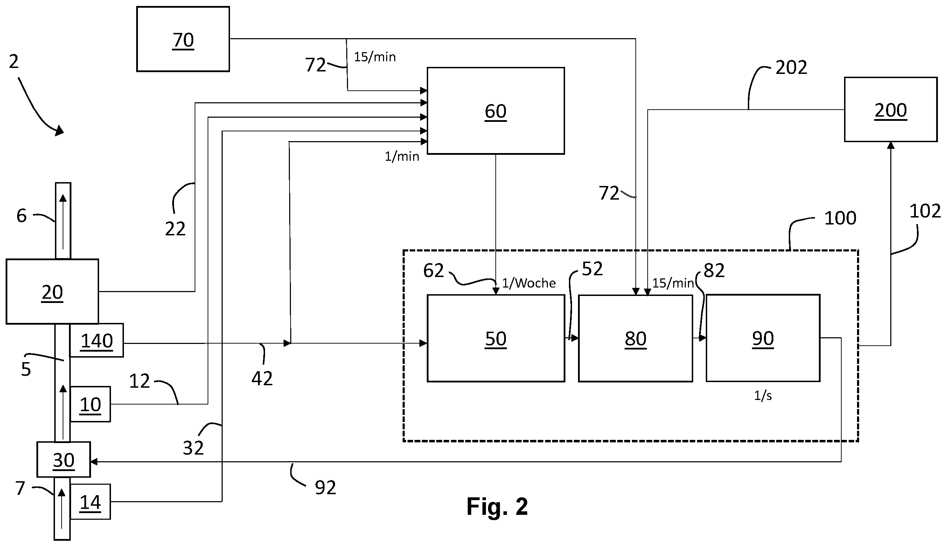

Die Fig. 2 zeigt eine schematische Zeichnung einer Heizungsregelungsanlage 2 gemäss einem weiteren Ausführungsbeispiel der Erfindung. Gleiche Bezugszeichen in allen Zeichnungen betreffen identische oder äquivalente Merkmale.

Die Heizungsregelungsanlage 1 oder 2 kann man auch als Verbraucher interpretieren, zu dem optional die Steuereinheit 200 hinzutritt. Sofern die ML-Instanz 60 remote vorgesehen ist, gehören diese entsprechenden Steuereinheiten auch nicht zum Verbraucher.

Daher werden hier nur die Unterschiede zum Ausführungsbeispiel nach Fig. 1 hervorgehoben. Die Steuerschaltung 100 umfasst hier nur noch die Gebäudemodelleinheit 50, welche zum Heizungssystem gehört, die prädiktive Regelung 80 und die eigentliche Regelung 90 der Soll-Vorlauftemperatur 92. Die maschinenlernende Instanz eines Gebäudemodells 60 ist hier ausgelagert, z.B. remote beim Provider des Regelungsverfahrens in dessen IT-Infrastruktur eingebettet. Diese Auslagerung kann auch beim Ausführungsbeispiel nach Fig. 1 vorgesehen sein. Hier kann die Einheit zur thermischen Leistungsberechnung 40 auch durch eine zentrale Verbrauchslesereinheit 140 ersetzt sein, die entweder eine Durchflussmessung an der Leitung 6 im Bereich direkt vor oder nach der Umwälzpumpe 20 umfasst oder ein Auslesen der Umdrehungs- und Pumphubwerte der Umwälzpumpe 20 direkt umfasst, weswegen die Verbrauchslesereinheit 140 direkt angrenzend sowohl an die Umwälzpumpe 20 wie auch an die Leitung 6 gezeichnet ist. Eine der Optionen ist ausreichend. Die Verbrauchslesereinheit 140 könnte auch wie in Fig. 1 durch die Leistungsberechnung 40 oder Leistungsschätzung 22 realisiert sein. Wesentlich ist die Übermittlung des Eingangsvektors der Wärmemenge 42 an die ML-Instanz eines Gebäudemodells 60 und die Gebäudemodelleinheit 50.

Der Unterschied zu Fig. 1 ist im Wesentlichen den Einsatz der Werte der Vorlauftemperatur 12 und der Rücklauftemperatur 32 als Eingangsvektoren für die ML-Instanz eines Gebäudemodells 60, die hinzukommen zu der Leistungsberechnung 40 oder der Leistungsschätzung 22 von der Durchlaufmenge der Umwälzpumpe 20. Es ist ausreichend, wenn einer der Eingangsvektoren Leistungsberechnung 40 oder Leistungsschätzung 22 vorliegen, auch wenn hier in der Fig. 2 beide als vorliegend eingezeichnet sind. Wenn die Wärmemengenzählung extern vorliegt, wie bei Gebäuden, bei denen beispielsweise Wohneinheiten mit einem Verbrauchszähler ausgestattet sind, dann ist eine Rückmeldung des Durchflusses durch die Umwälzpumpe nicht notwendig.

Der Vorteil des Ausführungsbeispiels der Fig. 2 liegt darin, dass die ML-Instanz des Gebäudemodells 60 in höherer Frequenz wie einmal pro Minute die Änderungen der Vorlauf- und Rücklauftemperaturen 12 und 32 neben der Wärmemenge (entweder als gemessener Wert 42 oder geschätzter Wert 22) als Eingangsvektoren erhält, was zusammen mit einer Auffrischkadenz der externen Daten (Wetter, Solarexposure etc.) 72 von einer Viertel Stunde eine bessere Anpassung des Gebäudemodells für die Gebäudemodelleinheit 50 gestattet.

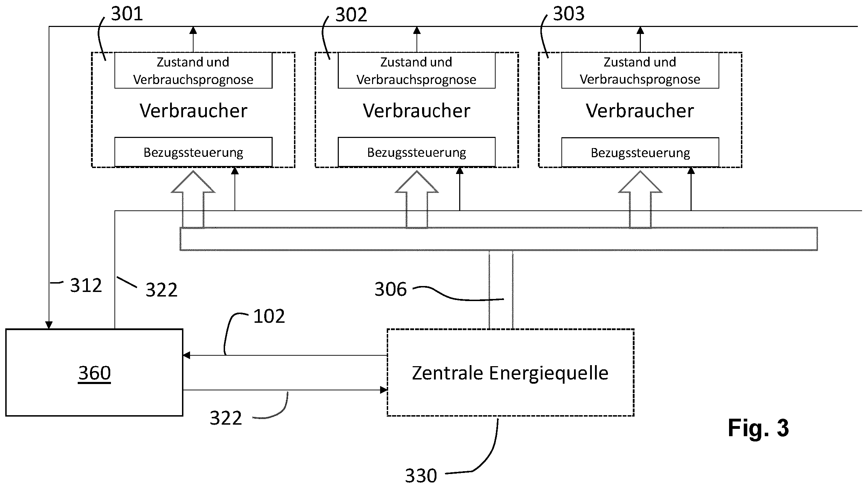

Die Fig. 3 zeigt eine schematische Zeichnung eines Systems von Heizungsregelungsanlagen nach Fig. 1 oder Fig. 2 in einem grösseren Gebäudezusammenhang.

Es sind drei Verbraucher 301, 302, 303 dargestellt, die jeweils beispielsweise ein Mehrfamilienhaus oder Einfamilienhaus oder Büro-/Industriegebäude darstellen. Jeder Verbraucher 301 bis 303 ist dabei aufgebaut wie das in den Fig. 1, 2 oder vorgängig in Detail in Alternativen beschriebenen Heizungsregelungsanlagen 1 oder 2. Die Heizungsregelungsanlagen 1 oder 2 sind Verbraucher, zu denen hier die Steuereinheit 360 hinzutritt, die die ML-Instanzen 60 der einzelnen Gebäude der Verbraucher 301, 302, 303 und die Steuereinheit des externen Versorgers 200 zusammenfasst.

Durch die Leistungsmessung sowie die Ausgangsvektoren (Prognosen usw.) wird eine solche Optimierung erst möglich. Die Wärmeverteilung oder allgemeiner Energieverteilung 306 als Last kann dynamisch zwischen Verbrauchern 301, 302, 303 aufgeteilt werden und die Wärmequelle oder allgemeiner Energiequelle 330 durch Rückmeldung des Verbrauches optimal eingestellt werden. Dabei kann es sich um eine klassische Öl- oder Gas-Heizung, Fernwärme, ein Wärmepumpenverbund etc. handeln Die Verbindung zu einer einzelnen Anlage nach Fig. 1 oder Fig. 2 ergibt sich dadurch, dass die Steuereinheit 360 eine Kostenfunktion 322 entsprechend dem Steuersignal 202 an die Steuerung 100 der Verbraucher 301, 302, 303 und dabei insbesondere an die Regelung 80 weitergibt und andererseits von der Steuerung 100 Verbrauchsdaten 102 erhält, die gebündelt über die Verbrauchsdatenleitung 312 von den Verbrauchern 301, 302, 303 geliefert werden. Damit kann die Steuereinheit 360 über die Steuerleitung 332 der zentralen Energiequelle 330 einen Eingangsvektor zur Optimierung des Verbrauchs zur Verfügung stellen.

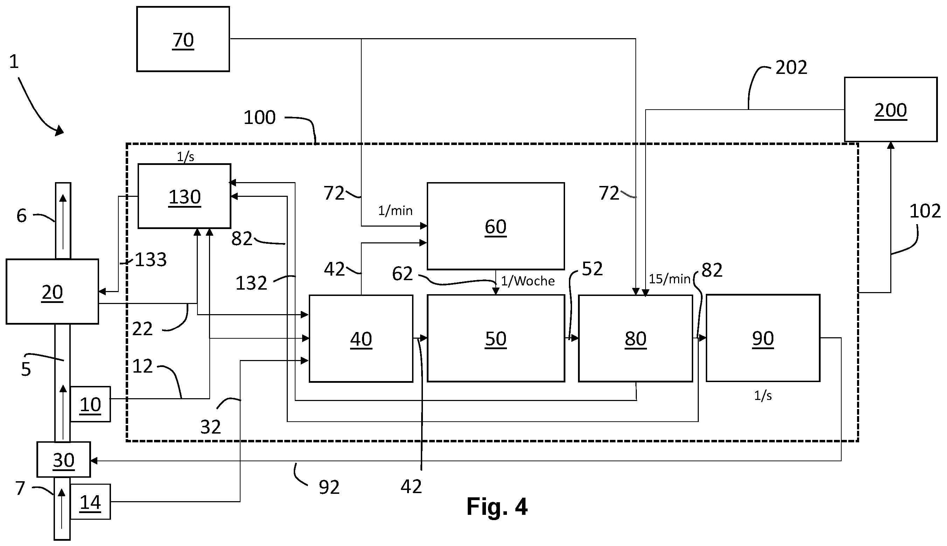

Die Fig. 4 zeigt eine schematische Zeichnung einer Heizungsregelungsanlage mit einer Pumpenregelung gemäss einem Ausführungsbeispiel der Erfindung. Der Unterschied zwischen dem Ausführungsbeispiel der Fig. 1 und der Fig. 4 liegt in einer Wärmequellen- und Pumpenregelung. Die Vorlaufsolltemperatur 82 der prädiktiven Regelung 80, der Sollleistungswert 132 aus der prädiktiven Regelung 80, die Vorlauftemperatur 12 und der Durchfluss 22 aus der Pumpe 20 werden in einer Regeleinheit 130 der Steuerung 100 benutzt, um über das Pumpensteuersignal 133 die Drehzahl der Pumpe 20 anzupassen und so die Leistung ins Gebäude zu regeln. Dabei kann die Steuerung auf einen Sekundentakt ausgelegt sein. Also können entweder durch die Vorgabe der Vorlaufsolltemperatur und/oder durch die Drehzahl der Pumpe 20 die abgegebene Leistung geregelt werden (solange ein genügender Durchfluss gewährleistet ist, was zumeist bedeutet, dass Thermostatventile in den Wohneinheiten offen sind). Es ist also eine gemeinsam abgestimmte Regelung möglich, dies wird insbesondere bei Einsatz von Mischern für die Einstellung der Vorlauftemperatur wesentlich sein. Natürlich beachtet die Regelung der Pumpe 20 auch einen dynamischen Mindestdruck und Maximaldruck, zwischen welchem sie sich bewegen muss, um nicht Geräusche zu verursachen oder einzelne Heizkreise unterzuversorgen.

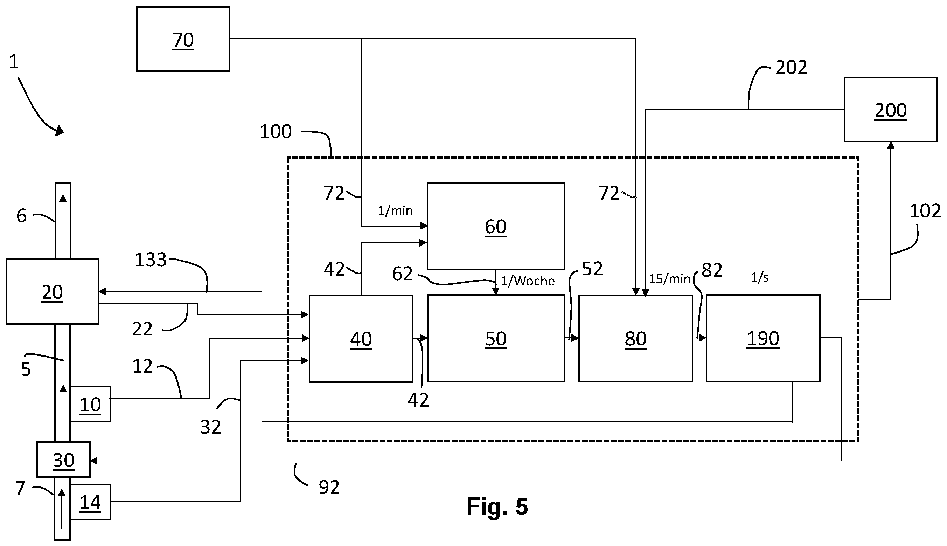

Die Fig. 5 zeigt eine schematische Zeichnung einer Heizungsregelungsanlage mit einer Pumpenregelung gemäss einem weiteren Ausführungsbeispiel der Erfindung. Der Unterschied zwischen dem Ausführungsbeispiel der Fig. 4 und der Fig. 5 liegt in einer kombinierten Wärmequellen- und Pumpenregelungseinheit 190. Die Vorlaufsolltemperatur 82 umfasst ebenfalls einen Hinweis auf die Sollleistung, die dazu benutzt wird, in einer kombinierten Steuereinheit 190 das Steuersignal 92 für die Vorlauftemperatur und das Steuersignal 133 der Pumpendrehzahl zu erzeugen. Die kombinierte Wärmequellen- und Pumpenregelungseinheit 190 regeln durch Vorgabe der Vorlaufsolltemperatur und durch die Vorgabe der Drehzahl der Pumpe die abgegebene Leistung (solange ein genügender Durchfluss gewährleistet ist).

**BEZUGSZEICHENLISTE**

| | | | |
|---|---|---|---|
| 1 | Heizungsanlage | 82 | extern modifizierte Vorlauftemperatur |
| 2 | Heizungsanlage | | |
| 5 | Fluid | 90 | PI-Regler Vorlauftemperatur |
| 6 | Leitung | 92 | Steuersignal Vorlauftemperatur |
| 7 | Rücklaufleitung | | |
| 10 | Temperatursensor Vorlauftemperatur | 100 | Steuerung |
| | | 102 | Verbrauchsdaten |
| 12 | Vorlauftemperatur | 130 | Pumpenregelung |
| 14 | Temperatursensor Rücklauftemperatur | 132 | Sollleistung |
| | | 133 | Steuersignal Pumpendrehzahl |
| 20 | Umwälzpumpe | | |
| 22 | Durchflussabschätzung | 140 | Verbrauchslesereinheit |
| 30 | Wärmequelle | 190 | Wärmequellen- und Pumpenregelungseinheit |
| 32 | Rücklauftemperatur | | |
| 40 | Einheit zur thermischen Leistungsberechnung | 200 | Steuereinheit Externer Versorger |
| 42 | Eingangsvektor Wärmemenge | 202 | Kostenfunktionen des Energieversorgers |
| 50 | Gebäudemodelleinheit | 301 | Heizungsanlage |
| 52 | modifizierte Vorlauftemperatur | 302 | Heizungsanlage |
| | | 303 | Heizungsanlage |
| 60 | ML-Instanz eines Gebäudemodelles | 306 | Vorlaufleitung |
| | | 312 | Verbrauchsdaten |
| 62 | Gebäudeabhängiger Eingangsvektor | 322 | Bezugssteuerung |
| | | 332 | Steuerleitung |
| 70 | externe Datenerfassung | 330 | zentrale Energiequelle |
| 72 | externer Eingangsvektor | 360 | übergeordnete Steuereinheit |
| 80 | prädiktive Modellregelung | | |

## Patentansprüche

1. Regelungssystem (100) für die Heizungsanlage (1, 2, 301, 302, 303) eines Gebäudes, bei dem die Heizungsanlage ein von einer Wärmequelle (30) geheizten Wärmeträgerfluid (5) einsetzt, wobei das Wärmeträgerfluid (5) über eine Umwälzpumpe (20) in einen Vorlaufkreis (6) einleitbar ist, wobei das Regelungssystem (100) konfiguriert ist, um die Vorlauftemperatur (12) des Fluids auf einen Temperatursollwert (92) zu regeln, wobei das Regelungssystem (100) eine maschinenlernende Instanz (60) eines Gebäudemodells (50) aufweist, wobei die maschinenlernende Instanz (60) als Eingangsvektor Wetterdaten (72) erhält , **dadurch gekennzeichnet, dass** die maschinenlernende Instanz (60) ein Regelsystem (90; 130, 190) zur Regelung der Vorlauftemperatur mit einer modifizierten Vorlauftemperatur (52, 82) beaufschlagt und dass das Regelungssystem (100) mit einer Energiesteuerungseinheit (200, 360) verbunden ist, um Verbrauchsdaten (102, 312) zu liefern, und dass die Energiesteuerungseinheit (200, 360) mit einer prädiktiven Modellregelung (80) des Regelungssystems (100) verbunden und dabei konfiguriert ist, um der prädiktiven Modellregelung (80) des Gebäudemodells (50) eine Kostenfunktion (202, 322) als Eingangsvektor zu übermitteln, wobei die Kostenfunktion zum Brechen von Versorgungsspitzen ausgestaltet ist.

2. Regelungssystem (100) nach Anspruch 1, bei dem die Energiesteuerungseinheit (200, 360) als Eingangswert (102) die von der Wärmequelle (30, 330) verbrauchte Energie aufweist.

3. Regelungssystem (100) nach Anspruch 1 oder 2, bei dem die maschinenlernende Instanz (60) und das Gebäudemodell (50) als weiteren Eingangsvektor Wärmemengedaten (42) erhält, wobei die Wärmemengedaten (42) in einem Leistungsberechnungsmodul (40) aus der Vorlauftemperatur (12) und einer Durchflussabschätzung (22) des Vorlaufkreises (6) oder durch eine Durchflussmessung des Vorlaufkreises (6) ermittelt werden.

4. Regelungssystem nach Anspruch 3, bei dem das Leistungsberechnungsmodul (40) als weiteren Eingangsvektor die Rücklauftemperatur (32) aufweist.

5. Regelungssystem nach einem der Ansprüche 1 bis 4, bei dem die maschinenlernende Instanz (60) des Gebäudemodells (50) als weiteren Eingangsvektor die Vorlauftemperatur (12) und/oder die Rücklauftemperatur (32) aufweist.

6. Regelungssystem nach einem der Ansprüche 1 bis 5, bei dem die maschinenlernende Instanz (60) des Gebäudemodells (50) räumlich getrennt von der Steuerung des Regelungssystems (100) vorgesehen ist.

7. Regelungssystem nach einem der Ansprüche 1 bis 6, bei dem die maschinenlernende Instanz (60) des Gebäudemodells (50) die Werte aller Eingangsvektoren mit einer Frequenz von 15 Sekunden bis 15 Minuten, bevorzugt jede Minute, erhält.

8. Regelungssystem nach einem der Ansprüche 1 bis 7, bei dem das Gebäudemodell (50) die prädiktive Modellregelung (80) mit der modifizierten Vorlauftemperatur (52) beaufschlagt, wobei die prädiktive Modellregelung (80) die modifizierte Vorlauftemperatur (52) mit Wetterdaten (72) in eine extern modifizierte Vorlauftemperatur (82) regelt.

9. Regelungssystem nach Anspruch 8, bei dem die Zeitkonstante der maschinenlernenden Instanz (60) des Gebäudemodells (50) um einen Faktor von mindestens 100 grösser ist als die Zeitkonstante der prädiktiven Modellregelung (80).

10. Regelungssystem nach einem der Ansprüche 8 oder 9, bei dem eine Pumpenregelung (130) vorgesehen ist, mit der die Drehzahl der Pumpe (20) regelbar ist, wobei die Pumpenregelung (130) als Eingangsparameter die Vorlaufsolltemperatur (82), die Vorlauftemperatur (12), einen Sollleistungswert (132) und den Pumpendurchfluss (22) umfasst.

11. Regelungssystem nach einem der Ansprüche 8 oder 9, bei dem die Wärmemengenabgabe durch eine kombinierte Regelungseinheit (190) der Erzeugung eines Vorlaufsolltemperatursteuersignals (92) und eines Pumpendrehzahlsteuersignals (133) steuerbar ist.

## Claims

1. A control system (100) for the heating system (1, 2, 301, 302, 303) of a building, in which the heating system uses a heat transfer fluid (5) heated by a heat source (30), wherein the heat transfer fluid (5) can be introduced into a flow circuit (6) via a circulation pump (20), wherein the control system (100) is configured to regulate the flow temperature (12) of the fluid to a temperature setpoint (92), wherein the control system (100) comprises a machine learning instance (60) of a building model (50), wherein the machine learning instance (60) receives weather data (72) as an input vector, **characterized in that** the machine learning instance (60) supplies a regulation system (90; 130, 190) with a modified flow temperature (52, 82) for regulating the flow temperature and that the control system (100) is connected to an energy control unit (200, 360) to supply consumption data (102, 312), and that the energy control unit (200, 360) is connected to a predictive model control (80) of the control system (100) and is configured to transmit a cost function (202, 322) as an input vector to the predictive model control (80) of the building model (50), wherein the cost function is designed to break supply peaks.

2. The control system (100) according to claim 1, wherein the energy control unit (200, 360) has as an input value (102) the energy consumed by the heat source (30, 330).

3. The control system (100) according to claim 1 or 2, wherein the machine learning instance (60) and the building model (50) receive heat amount data (42) as a further input vector, wherein the heat amount data (42) is determined in a power calculation module (40) from the flow temperature (12) and a flow estimate (22) of the flow circuit (6) or by a flow measurement of the flow circuit (6).

4. The control system according to claim 3, in which the power calculation module (40) has the return temperature (32) as a further input vector.

5. The control system according to one of claims 1 to 4, wherein the machine learning instance (60) of the building model (50) has the flow temperature (12) and/or the return temperature (32) as a further input vector.

6. The control system according to any one of claims 1 to 5, wherein the machine learning instance (60) of the building model (50) is provided spatially separated from the control of the control system (100).

7. The control system according to any one of claims 1 to 6, wherein the machine learning instance (60) of the building model (50) receives the values of all input vectors at a frequency of 15 seconds to 15 minutes, preferably every minute.

8. The control system according to any one of claims 1 to 7, wherein the building model (50) supplies the predictive model control (80) with the modified flow temperature (52), wherein the predictive model control (80) regulates the modified flow temperature (52) with weather data (72) to an externally modified flow temperature (82).

9. The control system according to claim 8, wherein the time constant of the machine learning instance (60) of the building model (50) is at least 100 times greater than the time constant of the predictive model control (80).

10. The control system according to any one of claims 8 or 9, wherein a pump control (130) is provided with which the speed of the pump (20) can be controlled, wherein the pump control (130) comprises as input parameters the flow setpoint temperature (82), the flow temperature (12), a setpoint power value (132), and the pump flow rate (22).

11. The control system according to any one of claims 8 or 9, wherein the heat amount output can be controlled by a combined control unit (190) generating a flow temperature setpoint control signal (92) and a pump speed control signal (133).

## Revendications

1. Système de régulation (100) pour l'installation de chauffage (1, 2, 301, 302, 303) d'un bâtiment, dans lequel l'installation de chauffage utilise un fluide caloporteur (5) chauffé par une source de chaleur (30), le fluide caloporteur (5) pouvant être introduit dans un circuit de départ (6) via une pompe de circulation (20), le système de régulation (100) étant configuré pour réguler la température de départ (12) du fluide à une valeur de consigne de température (92), le système de régulation (100) comprenant une instance d'apprentissage automatique (60) d'un modèle de bâtiment (50), l'instance d'apprentissage automatique (60) recevant des données météorologiques (72) en tant que vecteur d'entrée, **caractérisé en ce que** l'instance d'apprentissage automatique (60) est appliquée à un système de régulation (90 ; 130, 190) pour réguler la température de départ avec une température de départ modifiée (52, 82) et **en ce que** le système de régulation (100) est relié à une unité de commande d'énergie (200, 360) pour fournir des données de consommation (102, 312), et **en ce que** l'unité de commande d'énergie (200, 360) est reliée à un régulateur modèle prédictif (80) du système de régulation (100) et est configurée pour transmettre une fonction de coût (202, 322) au contrôleur prédictif à modèle (80) du modèle de bâtiment (50) en tant que vecteur d'entrée, la fonction de coût étant conçue pour réduire les pics de consommation.

2. Système de régulation (100) selon la revendication 1, dans lequel l'unité de commande d'énergie (200, 360) présente en tant que valeur d'entrée (102) l'énergie consommée par la source de chaleur (30, 330).

3. Système de régulation (100) selon la revendication 1 ou 2, dans lequel l'instance d'apprentissage automatique (60) et le modèle de bâtiment (50) reçoivent en tant que vecteur d'entrée supplémentaire des données de quantité de chaleur (42), les données de quantité de chaleur (42) étant déterminées dans un module de calcul de puissance (40) à partir de la température de départ (12) et d'une estimation du débit (22) du circuit de départ (6) ou par une mesure du débit du circuit de départ (6).

4. Système de régulation selon la revendication 3, dans lequel le module de calcul de puissance (40) comprend comme autre vecteur d'entrée la température de retour (32).

5. Système de régulation selon l'une des revendications 1 à 4, dans lequel l'instance d'apprentissage automatique (60) du modèle de bâtiment (50) comprend en tant que vecteur d'entrée supplémentaire la température de départ (12) et/ou la température de retour (32).

6. Système de régulation selon l'une des revendications 1 à 5, dans lequel l'instance d'apprentissage automatique (60) du modèle de bâtiment (50) est prévue séparément de la commande du système de régulation (100).

7. Système de régulation selon l'une des revendications 1 à 6, dans lequel l'instance d'apprentissage automatique (60) du modèle de bâtiment (50) reçoit les valeurs de tous les vecteurs d'entrée à une fréquence comprise entre 15 secondes et 15 minutes, de préférence toutes les minutes.

8. Système de régulation selon l'une des revendications 1 à 7, dans lequel le modèle de bâtiment (50) applique la température de départ modifiée (52) au régulateur modèle prédictif (80), le régulateur modèle prédictif (80) régulant la température de départ modifiée (52) avec des données météorologiques (72) en une température de départ modifiée en externe (82).

9. Système de régulation selon la revendication 8, dans lequel la constante de temps de l'instance d'apprentissage automatique (60) du modèle de bâtiment (50) est supérieure d'un facteur d'au moins 100 à la constante de temps du régulateur modèle prédictif (80).

10. Système de régulation selon l'une des revendications 8 ou 9, dans lequel est prévue une régulation de pompe (130) permettant de réguler la vitesse de rotation de la pompe (20), la régulation de pompe (130) comprenant comme paramètres d'entrée la température de départ de consigne (82), la température de départ (12), une valeur de puissance de consigne (132) et le débit de la pompe (22).

11. Système de régulation selon l'une des revendications 8 ou 9, dans lequel le dégagement de chaleur peut être commandé par une unité de régulation combinée (190) qui génère un signal de commande de température de départ de consigne (92) et un signal de commande de vitesse de rotation de pompe (133).
